# EUROPÄISCHE PATENTSCHRIFT

(11) **EP 3 358 230 B1**
(45) Veröffentlichungstag und Bekanntmachung des Hinweises auf die Patenterteilung: **04.03.2020**
(21) Anmeldenummer: 18151567.7
(22) Anmeldetag: 15.01.2018
(51) Int. Cl.: F04B 53/16, F16J 15/3208, F16J 15/3212, F16J 15/3252, F16J 15/3236, F04B 53/00

(54) **VORRICHTUNG ZUR FÜHRUNG EINES KRAFTÜBERTRAGUNGSELEMENTS**
DEVICE FOR GUIDING A THRUST ELEMENT
DISPOSITIF DE GUIDAGE D'UN ÉLÉMENT DE TRANSMISSION DE PUISSANCE

(30) Priorität: 02.02.2017 DE 102017102028
(43) Veröffentlichungstag der Anmeldung: 08.08.2018
(73) Patentinhaber: NIDEC GPM GmbH, 98673 Auengrund /OT Merbelsrod (DE)
(72) Erfinder: Pawellek, Franz, 96486 Lautertal (DE); Steinke, Stephan, 98693 Ilmenau (DE)
(74) Vertreter: Kuhnen & Wacker Patent- und Rechtsanwaltsbüro PartG mbB

(56) Entgegenhaltungen:
- WO-A1-2016/012136
- WO-A1-2016/091419
- DE-A1-102013 000 514
- DE-A1-102014 225 925

## Beschreibung

Die vorliegende Erfindung betrifft eine Vorrichtung zur Führung und Abdichtung einer linearen Gleitbewegung eines Kraftübertragungselements in einer Durchtrittsöffnung zwischen zwei Bereichen unterschiedlicher Medien.

Im Stand der Technik sind Führungsbuchsen bekannt, die eine Gleitbewegung einer Schubstange bzw. einer Stößelstange zur Kraftübertragung an einem Zylinder, einem Ventil, einem Regelschieber oder dergleichen führen.

So ist beispielsweise aus der EP 1 831 552 B1 ein Taumelscheibenverdichter bekannt, bei dem eine Kolbenstange in einer trockenlauffähigen Gleitlagerbuchse mit einer Beschichtung aus Polytetrafluoräthylen (PTFE) bzw. Teflon® geführt ist.

Für Anwendungszwecke, bei denen sich ein solches Kraftübertragungselement zwischen zwei Bereichen mit unterschiedlichen Medien, wie z.B. einem flüssigen Fördermedium in einer Pumpenbaugruppe und einer trockenlaufenden Antriebsgruppe erstreckt, sind ferner Gleitlagerbuchsen bekannt geworden, die neben einem Körper mit Führungsfunktion um weitere Elemente zur Abdichtung der linearen Gleitbewegung zwischen den zwei Medien ergänzt werden.

Die DE 10 2012 021 077 A1 offenbart hierzu eine Dichtungseinrichtung mit einem Verbundkörper aus Dichtelementen und einem Führungskörper, die zeitsparend als eine Einheit montiert werden können. Dabei besteht der Führungskörper aus einem Duroplast, wie einem Epoxidharz-, oder Phenolharz-Verbund, oder aus einem verstärkten Thermoplast, wie einem Verbund aus Polyamid (PA), Polyphenylensulfid (PPS) oder Polyehteretherketon (PEEK). An dem Führungskörper sind Dichtelemente angeflanscht, die aus Nitrilkautschuk (NBR), Acrylkautschuk (ACM) oder Fluorkautschuk (FPM) bestehen. Um entsprechende Gleitführungen abzudichten, werden demnach zunächst Gleithülsen aus härteren Materialien mit niedrigeren Reibwerten als Führungsbuchsen gefertigt, die anschließend mit Dichtungen kombiniert werden.

Die Vorteile einer einfachen Montage solcher kompakt ausführbaren Verbundkörper muss jedoch durch höhere Herstellungskosten erkauft werden, die mit einem der Anzahl an Einzelteilen entsprechend hohen Aufwand zur individuellen Fertigung der funktionalen Komponenten aus unterschiedlichen Materialien und der anschließenden Verbindung einhergeht.

Ferner bestehen Anwendungszwecke, in denen die Haltbarkeit zahlreicher Dichtungsmaterialen durch den Kontakt mit einem Medium oder sonstiger äußerer Einflüsse einen erheblich einschränkenden Faktor darstellt. So neigen selbst Dichtungen aus hydriertem Acrylnitrilbutadien Kautschuk (HNBR), die sich bereits durch eine verbesserte Temperaturbeständigkeit gegenüber solchen aus Nitrilkautschuk (NBR) bei vergleichbaren Materialeigenschaften auszeichnen, im Dauerbetrieb mit Betriebsstoffen wie einem Kühlmittel, das Glycerine oder Alkohole enthält, und unter dem Einfluss von starken Temperaturschwankungen und Druckschwankungen stehen, wie sie in einem Kühlmittelkreislauf einer Kühlmittelpumpe auftreten, im Laufe der Lebensdauer zu einer Versprödung, d.h. insbesondere zu einer Verschlechterung der Dichtungseigenschaften.

Die WO 2016/091419 A1 beschreibt eine Kraftstoffhochdruckpumpe mit einer Dichteinrichtung an einem Kolben. Die DE 10 2014 225 925 A1 und die DE 2013 000 514 A1 beschreiben Dichtungsanordnungen an einem translatorisch bewegbaren Maschinenelement.

Die WO 2016/012136 A1 betrifft eine Kraftstoffhochdruckpumpe mit einem Dichtelement, das aus Polytetrafluorethylen (PTFE) gefertigt sein kann.

Demnach besteht eine Aufgabe der vorliegenden Erfindung darin, eine fertigungsoptimierte und langlebige Vorrichtung zur Führung und doppelseitigen Abdichtung eines Kraftübertragungselements in einer Durchtrittsöffnung zwischen zwei Bereichen mit unterschiedlichen Medien zu schaffen.

Die Aufgabe wird durch eine Vorrichtung mit den Merkmalen des Anspruchs 1 gelöst.

Die erfindungsgemäße Führungsvorrichtung zeichnet sich insbesondere dadurch aus, dass in einem Führungsabschnitt wenigstens eine Drainageöffnung angeordnet ist, die eine Flüssigkeitsverbindung zwischen einer innenliegenden Führungsfläche und einer Außenfläche des Führungsabschnitts herstellt.

Die Erfindung sieht in dem Anwendungsbereich einer Durchtrittsöffnung zwischen zwei Bereichen mit unterschiedlichen Medien, erstmals eine einteilige Führungsbuchse mit einer Drainageöffnung vor, bei der funktionale Abschnitte zur Führung einer linearen Gleitbewegung eines Kraftübertragungselements als auch diejenigen zur Abdichtung aus einem integralen Polymerkörper ausgebildet sind.

Während der geführten Gleitbewegung des Kraftübertragungselements kann ein flüssiges Medium trotz der statischen Dichtungswirkung der Dichtungsabschnitte in geringem Maße zum Führungsabschnitt vordringen. Durch die Bereitstellung einer Ableitung durch Drainagebohrungen wird zusätzlich eine dynamische Dichtungswirkung erzielt, die einer Migration eines Mediums zwischen zwei Seiten der Durchtrittsöffnung entgegenwirkt.

Ferner liegt dem Anmeldungsgegenstand die Erkenntnis zugrunde, dass sich sowohl reines PTFE oder ein modifiziertes PTFE-Compound, das aus einer spritzgusstechnisch geeigneten Polymerverbindung aus PTFE und einem anderen Kunststoff besteht, als auch PVDF (Polyvinylidenfluoridin) in der vorliegenden Anwendung auf vorteilhafter Weise dazu eignen, eine Führungsfunktion der Gleitbewegung und zugleich eine Dichtungsfunktion durch einen integralen Körper zu realisieren.

Neben den bevorzugten tribologischen Eigenschaften eines aus PTFE oder PVDF gebildeten Köpers zur Bereitstellung einer Führungsfläche mit niedrigem Reibungswiderstand, zeigen PTFE und PVDF, unter der Ausgestaltung der integralen Dichtungsabschnitte, auch unter dynamischer Belastung gute Eigenschaften zur Abdichtung zwischen einem gasförmigen und einem flüssigen Medium auf.

Im vorliegenden Anwendungsfall ist der Einsatz von PTFE oder PVDF als Dichtungsmaterial mit dem Vorteil verbunden, dass sich PTFE oder PVDF auch unter den Betriebsstoffen und schwankenden Betriebsbedingungen eines Kühlkreislaufs einer Verbrennungsmaschine als Formbeständig erweisen, wodurch Fehlfunktionen durch Deformationen, Dispositionen oder zunehmende Maßtoleranzen unterbunden werden können.

Darüber hinaus eignet sich PTFE oder PVDF zur Ausbildung eines Körpers, der sowohl den Anforderungen an die Materialeigenschaften der Festigkeit als auch deren Oberflächeneigenschaften, d.h. insbesondere ohne das Erfordernis von zusätzlichen Beschichtungen oder dergleichen, gerecht wird.

Die erfindungsgemäße Vorrichtung stellt somit einen mittels Kunststoffspritzgießverfahren herstellbaren, d.h. vereinfachten und kostengünstigeren Aufbau einer Führung und Abdichtung eines Kraftübertragungselements, das sich zwischen zwei Räumen mit verschiedenen Medien linear bewegt, bereit.

Dementsprechend geht der Vorteil einer einfachen Montage einer kompakten Führungsvorrichtung in einer Durchtrittsöffnung nicht zu Lasten einer aufwendigeren Fertigung eines Verbundkörpers, der aus mehreren funktionalen Abschnitten und zwischengeordneten Passungen besteht.

Zudem schafft die erfindungsgemäße Vorrichtung eine statische und dynamische Abdichtung zwischen den beiden Räumen, die insbesondere in Anwendungen mit den obenstehenden Bedingungen überlegen ist.

Vorteilhafte Weiterbildungen der erfindungsgemäßen Vorrichtung sind Gegenstand der abhängigen Ansprüche.

Gemäß einem Aspekt der Erfindung können die Spreizelemente ringförmig mit einem mittleren Durchmesser ausgebildet sein, der einem Durchmesser der radialen Verzweigung der Dichtungsabschnitte entspricht. Durch diese Ausgestaltung kann mit einem Spannelement auf jeder Seite der Führungsbuchse eine gleichmäßige radiale Vorspannung der Dichtungslippen über den Umfang erzeugt werden.

Gemäß einem Aspekt der Erfindung können die Spreizelemente als Blechbiegeteile hergestellt sein. Derartige Bauteile sind durch Bearbeitungsschritte wie Stanzen und Biegen günstig herzustellen. Ein geeigneter Federstahl beansprucht zudem bei gleicher Geometrie weniger Bauraum als Elastomere oder ähnliche flexible Werkstoffe und kann bei der Fertigung aufgrund seiner glatten Oberflächenbeschaffenheit leichter in einen Dichtungsabschnitt eingesetzt bzw. eingespreizt werden. Darüber hinaus sind die elastischen Eigenschaften von Blechbiegeteilen beständig gegenüber Versprödungen durch äußere Einflüsse.

Gemäß einem Aspekt der Erfindung können die Spreizelemente einen Querschnitt mit wenigstens einem Wendeabschnitt und zwei Schnenkelabschnitten aufweisen. Diese Formgebung stellt einen bevorzugt einfachen Aufbau eines Blechbiegeteils mit geringem Material und Verarbeitungsaufwand zur funktionalen Bereitstellung eines Spreizelements dar.

Gemäß einem Aspekt der Erfindung kann die Außenfläche des Führungsabschnitts einen kleineren Außendurchmesser als ein äußerer Lippenabschnitt der Dichtungsabschnitte aufweisen. Hierdurch kann im Falle einer geeigneten Innenkontur der Durchtrittsöffnung mit dementsprechendem Radialvorsprung eine formschlüssige axiale Fixierungsmöglichkeit der Führungsbuchse unter geringem Montageaufwand geschaffen werden.

Gemäß einem Aspekt der Erfindung kann der Führungsabschnitt mit den integralen Dichtungsabschnitten in Bezug zu einer axialen Mitte im Wesentlichen symmetrisch ausgebildet sein. Durch einen symmetrischen einfachen Aufbau wird bei der Fertigung die Bestückung eines Produkts mit der Führungshülse vereinfacht, da keine Einsetzungsrichtung berücksichtigt werden braucht. Somit kann eine Fehlerquelle falsch eingesetzter Führungshülsen vermieden werden.

Gemäß einem Aspekt der Erfindung kann an dem axialen Ende von wenigstens einem äußeren Lippenabschnitt ein Kragenabschnitt ausgebildet sein, der einen größeren Außenumfang als der äußere Lippenabschnitt aufweist und zu diesem stufenförmig abgesetzt ist. Falls eine axiale Gesamtabmessung oder eine radiale Abstufung der Innenkontur der Durchtrittsöffnung gemeinsam mit dem Kragenabschnitt bündig abschließt, können sowohl eine weitere Dichtungsfunktion zwischen dem Dichtungsabschnitt und der Durchtrittsöffnung als auch eine weitere Fixierungsfunktion bereitgestellt werden.

Gemäß einem Aspekt der Erfindung kann die Vorrichtung ferner wenigstens einen Einpressabschnitt aufweisen, der axial benachbart zu einem Dichtungsabschnitt die Führungsbuchse mittels Presspassung in der Durchtrittsöffnung fixiert, und eine radiale Verzweigung eines Dichtungsabschnitts, in der ein Spreizelement eingesetzt ist, axial abschließt. Indem die Vorrichtung einpressbare Abschnitte umfasst, kann sie bei gleichbleibender Führungsbuchse für verschiedene Eintritts- und Austrittsenden von Durchtrittsöffnungen individualisiert werden. Durch die Ausgestaltung von Presspassungen werden eine verbesserte axiale Fixierung sowie eine zusätzliche Abdichtung der Führungsbuchse erzielt.

Gemäß einem Aspekt der Erfindung kann das wenigstens eine Einpresselement radiale Konturen und/oder radiale Abmessungen aufweisen, die eine Passung gegenüber den benachbarten Lippenabschnitten bereitstellen. Hierdurch kann ein radialer Mindestabstand zwischen den freien Enden der beiden Lippenabschnitte sichergestellt werden. Ferner ergibt sich bei geeigneter Überschneidungstiefe der Passung die Möglichkeit einer axialen Positionsfixierung des Spreizelements gegen einen Scheitelpunkt der Verzweigung.

Gemäß einem Aspekt der Erfindung kann das wenigstens eine Einpresselement einen größeren Außendurchmesser als ein äußerer Lippenabschnitt aufweisen. Durch diese Ausgestaltung kann eine alternative Variante zu dem Kragenabschnitt geschaffen werden, die ebenfalls eine axiale Fixierung sowie eine zusätzliche Abdichtung der Führungsbuchse bereitstellt. Je nach Ausgestaltung der Durchtrittsöffnung kann ein solcher Einpressabschnitt einseitig oder beidseitig zwischen dem Ende eines Dichtungsabschnitts und einem axialen Abschluss der Durchtrittsöffnung eingebracht werden.

Gemäß einem Aspekt der Erfindung kann ein Einpresselement einen im Wesentlichen gleichen Außendurchmesser wie ein benachbarter äußerer Lippenabschnitt aufweisen, und ein Einpresselement einen größeren Außendurchmesser als ein benachbarter äußerer Lippenabschnitt aufweisen. Durch diese Ausgestaltung kann eine weitere alternative Variante zur Fixierung und zusätzlichen Abdichtung der Führungsbuchse anhand einer innenseitigen und außenseitigen Paarung von Einpresselement bereitgestellt werden, falls die Ausgestaltung der Durchtrittsöffnung lediglich einen einseitigen Zugang zum Einsetzen der Vorrichtung zulässt.

Gemäß einem Aspekt der Erfindung kann ein erster axialer Abschnitt des wenigstens einen Einpresselements aus PTFE oder PVDF bestehen, und ein zweiter axialer Abschnitt kann aus einem anderen Kunstharz bestehen. Somit kann ein innenliegender Abschnitt des Einpresselements, der mit dem Dichtungsabschnitt der Führungshülse in Kontakt tritt, dieselben Materialeigenschaften, wie z.B. Wärmeausdehnungskoeffizienten aufweisen, während ein Material eines außenliegenden Abschnitts des Einpresselements, dessen Funktion primär in der Fixierung der Vorrichtung liegt, in Bezug auf eine optimierte Haftung in der Durchtrittsöffnung gewählt sein kann.

Die Erfindung wird nachfolgend durch zwei Ausführungsbeispiele in den begleitenden Figuren näher erläutert. Es zeigt:
- Fig. 1: in der unteren Hälfte einen Längsschnitt durch eine Führungsvorrichtung einer ersten Ausfuhrungsform der Erfindung, die im Vergleich zu einem herkömmlichen Aufbau in der oberen Hälfte dargestellt ist; und
- Fig. 2: in der unteren Hälfte einen Längsschnitt durch eine Führungsvorrichtung einer zweiten Ausführungsform der Erfindung, die im Vergleich zu einem anderen herkömmlichen Aufbau in der oberen Hälfte dargestellt ist.

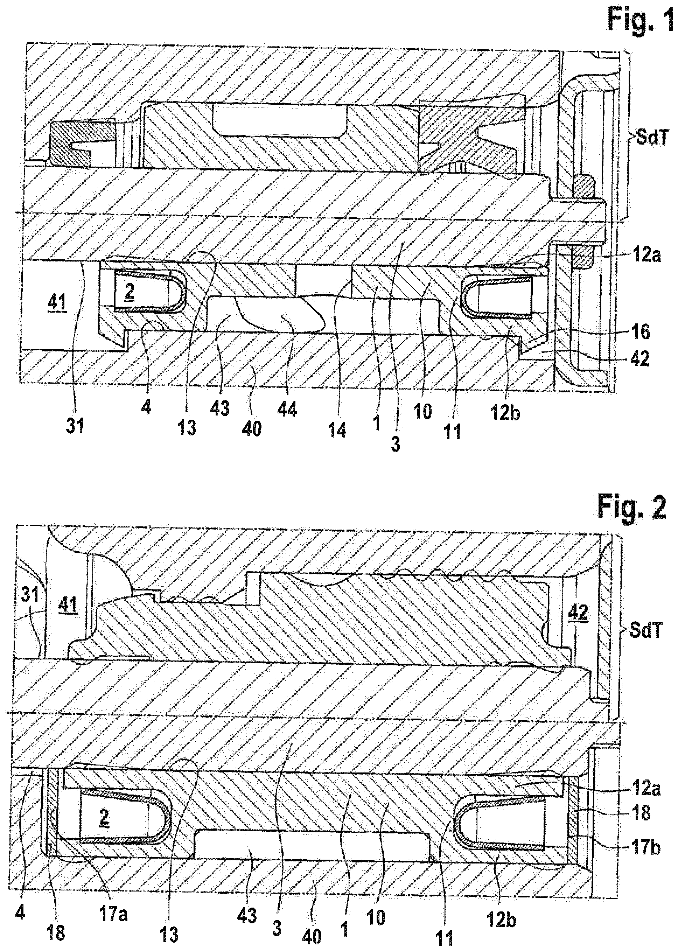

Nachstehend wird eine erste Ausführungsform der Führungsvorrichtung mit Bezug auf Fig. 1 beschrieben. In Fig. 1 ist in der oberen Hälfte zum Vergleich der Querschnitt einer dreiteiligen Führungsvorrichtung aus dem Stand der Technik dargestellt.

In dem folgenden Anwendungsbeispiel wird die Führungsvorrichtung in einer Kühlmittelpumpe 40 angewendet, wobei ein Kraftübertragungselement 3 eine Schubstange bzw. Stößelstange ist, die eine Kraft zwischen einem Stellglied und einem Regelschieber (nicht dargestellt) überträgt. Das Stellglied ist in einem links abgebildeten trockenen ersten Bereich 41 des Pumpenaufbaus angeordnet, in dem eine pneumatische Antriebsbaugruppe aufgenommen ist. Der Regelschieber ist in einem rechts abgebildeten zweiten Bereich 42 einer Pumpenkammer verschiebbar angeordnet, in dem eine Beschleunigung eines Förderstroms von Kühlmittel umgesetzt wird, wobei der Regelschieber entlang eines Verstellwegs des Kraftübertragungselements 3 ein strömungswirksames Umfeld eines rotierenden Flügelrads (nicht dargestellt) zum Förderstrom teilweise abdeckt oder freigibt.

Der trockene erste Bereich 41 und der nasse zweite Bereich 42 sind durch eine Wand 40 des Pumpenaufbaus unterteilt, in der eine Durchtrittsöffnung 4 bereitgestellt ist. Das Kraftübertragungselement 3 erstreckt sich zwischen den beiden Bereichen durch die Durchtrittsöffnung 4 und führt in Längsrichtung eine lineare Gleitbewegung entlang des Verstellwegs des Stellglieds aus.

Die Führungsvorrichtung ist zwischen einer Innenfläche der Durchtrittsöffnung 4 und einer Umfangsfläche des Kraftübertragungselements 3 angeordnet, um eine Gleitbewegung des Kraftübertragungselements 3 zu führen und gegenüber Querkräften zu stützen, die z.B. durch Turbolenzen des Förderstroms an dem Regelschieber auf das Kraftübertragungselement 3 eingeleitet werden. Dabei besteht das Erfordernis, ein Eindringen von Kühlmittel aus dem nassen zweiten Bereich 42 der Pumpenkammer in den trockenen ersten Bereich 41 der elektrischen Antriebsbaugruppe zu verhindern.

Die Führungsbuchse 1 der Führungsvorrichtung, die in der unteren Hälfte der Fig. 1 dargestellt ist, besteht aus einem Führungsabschnitt 10 und zwei Dichtungsabschnitten 11. Der Führungsabschnitt 10 ist ein Mantelkörper dessen Innenkontur im Wesentlichen derjenigen einer außenliegenden Umfangsfläche 31 des Kraftübertragungselements 3 entspricht. Die Außenkontur entspricht im Wesentlichen einer innenliegenden Umfangsfläche der Durchtrittsöffnung 4. In dem dargestellten Fall ist die Durchtrittsöffnung 4 kreisförmig und das Kraftübertragungselement 3 weist eine zylindrische Außenfläche auf, sodass der Führungsabschnitt 10 als hohlzylindrischer Körper mit einem ringförmigen Querschnitt ausgebildet ist.

Der Führungsabschnitt 10 und die Dichtungsabschnitte 11 sind gemeinsam als ein Körper der Führungsbuchse 1 integral ausgebildet und sind als Formteil aus PTFE bzw. Teflon® oder PVDF gusstechnisch hergestellt.

Die Dichtungsabschnitte 11 bilden die axialen Enden des Führungsabschnitts 10 und schließen einen Öffnungsquerschnitt der Durchtrittsöffnung 4 beiderseits zu dem ersten Bereich 41 und dem zweiten Bereich 2 ab. Die Dichtungsabschnitte 11 sind durch eine Verzweigung in Form eines Ringkanals in zwei radial unterteilte Lippenabschnitte 12 unterteilt. Die radial inneren Lippenabschnitte 12a der Dichtungsabschnitte 11 dichten einen Spalt zwischen der bewegten Fläche 31 des Umfangs des Kraftübertragungselements 3 und einer innenliegenden Führungsfläche 13 der Führungsbuchse 1 dynamisch ab. Die radial äußeren Lippenabschnitte 12b der Dichtungsabschnitte 11 dichten einen Spalt zwischen einer Außenfläche der Führungsbuchse 1 und einer Innenkontur der Durchtrittsöffnung 4 statisch ab.

In die Verzweigung der Dichtungsabschnitte 11 ist jeweils ein ringförmiges Spreizelement 2 eingesetzt, das unter Vorspannung gegen die nach innen weisenden Flanken der Lippenabschnitte 12 eingespreizt ist und diese radial gegen das Kraftübertragungselement 3 bzw. gegen den Umfang der Durchtrittsöffnung 4 anpresst. Der Anpressdruck kann anhand der elastischen Eigenschaft des Spreizelements gewählt werden. Das Spreizelement 2 ist als Blechbiegeteil aus einem Federstahl gestanzt und weist im Querschnitt ein U-förmiges Profil mit einem Wendeabschnitt und zwei Schenkelabschnitten 21 auf, welche den Anpressdruck der elastischen Deformation des Wendeabschnitts 20 an den inneren Flanken der Lippenabschnitte 12 aufbringen. Die Spreizelemente 2 sind ferner mit dem Wendeabschnitt 20 voraus in die Verzweigung des Dichtungsabschnitts 11 eingesetzt, sodass eine Rückstellkraft des vorgespannten Spreizelements 2 primär nach außen zu den axialen Enden wirkt, an denen der Kontakt zu den Medien, insbesondere zu dem Kühlmittel in dem zweiten Bereich 42 auftritt.

An den freien Enden der radial äußeren Lippenabschnitten 12b ist ein Kragenabschnitt 16 ausgebildet, der einen abgestuften größeren Außendurchmesser als der äußere Lippenabschnitt 12b aufweist. Hierdurch vergrößert der Kragenabschnitt 16 einerseits die vom Medium zu überwindende Spaltlänge, wodurch die statische Dichtungseigenschaft verbessert wird. Andererseits bewirkt der Kragenabschnitt 16 eine axiale Fixierung der Führungsvorrichtung in der Durchtrittsöffnung 4. Darüber hinaus weist der Kragenabschnitt 16 einen abgestuften kleineren Innendurchmesser als der äußere Lippenabschnitt 12b auf. Hierdurch wird ein Hinterschnitt gebildet, hinter dem ein Schenkelabschnitt 21 beim Einschieben des Spreizelements 2 einrastet, sodass dieses im eingespreizten Zustand gegen ein axiales Herausrutschen gesichert ist.

Der abgestufte Innendurchmesser des Kragenabschnitts 16 kann Unterbrechungen im Umfang aufweisen, sodass Rastnasen gebildet werden, die eine Montage des Spreizelements 2 erleichtern. Ebenso können am Umfang des Spreizelements 2 Einschnitte vorhanden sein, die das federelastische Verhalten optimieren.

Die Dichtungsabschnitte 11 weisen einen größeren Außendurchmesser als der Führungsabschnitt 10 auf. Kongruent hierzu ist in der Durchtrittsöffnung 4 ein umlaufender Radialvorsprung 43 seitens einer Gehäusetrennwand 40 der Pumpe vorgesehen, der durch Formschluss mit den abgestuften Radien der Dichtungsabschnitte 11 eine axiale Fixierung der Führungsbuchse 1 gegenüber der Gleitbewegung des Kraftübertragungselements 3 bereitstellt.

In einem mittleren Bereich des Führungsabschnitts 10 sind Drainageöffnungen 14 in dem Mantelkörper eingebracht, die mit einem gehäuseseitig vorgesehenen Drainagekanal 44 in Verbindung stehen. Somit können Tröpfchen des Kühlmittels, die während einer reziproken Bewegung des Kraftübertragungselements 3 zwischen die Umfangsfläche des Kraftübertragungselements 3 und den radial inneren Lippenabschnitt 12a gelangen, von der Führungsfläche 13 aus abgeleitet werden, sodass die Tröpfchen nicht die gesamte axiale Länge passieren. Hierdurch wird die dynamische Abdichtung verbessert.

Nachfolgend wird eine zweite Ausfuhrungsform der Führungsvorrichtung mit Bezug auf Fig. 2 beschrieben. In Fig. 2 ist in der oberen Hälfte zum Vergleich der Querschnitt einer einteiligen Dichtungsvorrichtung aus dem Stand der Technik dargestellt.

Die zweite Ausfuhrungsform entspricht weitgehend der ersten Ausführungsform und unterscheidet sich durch die Ausgestaltung der axialen Enden an der Führungsbuchse 1. In der zweiten Ausfuhrungsform umfasst die Führungsvorrichtung neben der Führungsbuchse 1 zusätzliche Einpressabschnitte 17, die sich an die freien Enden der Lippenabschnitte 12 anschließen. Der radial innere Lippenabschnitt 12a weist eine konstante Dicke auf. Der radial äußere Lippenabschnitt 12b weist lediglich eine nach innen weisende Ausprägung auf, die mit dem inneren Teil des Kragenabschnitts 16 aus der ersten Ausführungsform vergleichbar ist, und die das Spreizelement 2 in der eingeschobenen Position sichert. Eine nach außen weisende Ausprägung eines Kragenabschnitts entfällt bei der zweiten Ausführungsform.

Die Einpressabschnitte 17, die ebenfalls wie die Führungsbuchse 1 aus PTFE oder PVDF bestehen, sind zu den äußeren Enden mit einer ringförmigen Kunststoffumspritzung versehen. Die Abmessung eines solchen, durch Spritzguss integrierten Kunststoffrings 18 wird auf ein geringes Übermaß zu einem Durchmesser der Durchgangsöffnung 4 gefertigt, sodass dieser nach einem axialen Einpressvorgang zur Montage der Führungsvorrichtung eine Presspassung zur Durchgangsöffnung 4 erzeugt, die eine Fixierung und zusätzliche Abdichtung bewirkt. Hierbei unterscheiden sich zwei Einpressabschnitte 17 entsprechend der Ausgestaltung der Durchgangsöffnung 4 von einander, wobei an einem Ende, das bezüglich einer Einsetzrichtung zur Montage der Führungsvorrichtung zuerst eingeführt wird, einen Einpressabschnitt 17a mit geringerem Durchmesser aufweist als der nachfolgende Einpressabschnitt 17b.

In Fig. 2 ist die Durchgangsöffnung 4 mit einem als Sackloch ausgeführten Radialabschnitt ausgebildet, der sich in dem axialen Abmaß der Führungsvorrichtung erstreckt. Der einwärts liegende Einpressabschnitt 17a erzeugt eine Presspassung zu einem Bereich der Durchgangsöffnung 4, der bezüglich der Einsetzrichtung vor einer Abgrenzungsstufe des zuvor genannten, als Sackloch ausgeführten Radialabschnitts liegt. Dabei entspricht der Durchmesser des Einpressabschnitts 17a im Wesentlichen demjenigen eines benachbarten äußeren Lippenabschnitts 12b. Der Durchmesser des nachfolgenden Einpressabschnitts 17b ist auf einen eingangsseitigen Durchmesser der Durchgangsöffnung eingepasst, der größer als derjenige eines benachbarten äußeren Lippenabschnitts 12b gewählt ist.

Die Einpressabschnitte 17 werden nach einem Einsetzen der Spreizelemente 2 in die radialen Verzweigungen der Dichtungsabschnitte 11, als separate Elemente durch eine Formpassung mit den benachbarten Lippenabschnitten 12 zusammengefügt, sodass sie die ringförmigen Räume der Verzweigung einschließlich Spreizelement 2 abschließen.

Neben den dargestellten Ausführungsformen kann die erfindungsgemäße Führungsvorrichtung weitere alternative Ausgestaltungen aufweisen.

So kann die Führungsvorrichtung außer einer rotationsymmetrischen Gestalt ebenso eine rechteckige oder sonstige mehreckige Innenkontur oder Außenkontur aufweisen, die an vorliegende Ausgestaltungen des Kraftübertragungselements und der Durchtrittsöffnung einer spezifischen Anwendung angepasst werden kann.

Anstelle eines ringförmigen Spreizelements 2 können ebenso elastische, separate Spreizelemente, wie z.B. Federspangen über den Umfang verteilt in der Verzweigung zwischen den Lippenabschnitten 12 angeordnet sein.

Der Außendurchmesser des Führungsabschnitts 10 und des äußeren Lippenabschnitts 12b können derart gewählt werden, dass sie gleich groß sind, oder ein zu den Figuren umgekehrtes Größenverhältnis aufweisen, wobei ein seitens der Gehäusetrennwand 40 bereitgestellter umlaufender Radialvorsprung 43 entfällt.

## Patentansprüche

1. Vorrichtung zur Führung einer linearen Gleitbewegung eines Kraftübertragungselements (3) in einer Durchtrittsöffnung (4) zwischen zwei Bereichen (41, 42) mit unterschiedlichen Medien, aufweisend:
eine Führungsbuchse (1), die einen zentralen mantelförmigen Führungsabschnitt (10) mit einer innenliegende Führungsfläche (13) aufweist, wobei
die Führungsbuchse (1) Dichtungsabschnitte (11) aufweist, die sich zu den axialen Enden des Führungsabschnitts (10) erstrecken und sich in wenigstens einen radial inneren Lippenabschnitt (12a) und einen radial äußeren Lippenabschnitt (12b) verzweigen;
Spreizelemente (2), die mittels elastischer Vorspannung eine Spreizwirkung zwischen zwei Radien erzeugen können, in einer radialen Verzweigung der Dichtungsabschnitte (11) zwischen dem inneren Lippenabschnitt (12a) und dem äußeren Lippenabschnitt (12b) angeordnet sind; und wobei
der Führungsabschnitt (10) und die Dichtungsabschnitte (11) gemeinsam als integraler Körper aus PTFE, einer PTFE enthaltenden Polymerverbindung oder aus PVDF ausgebildet sind
**dadurch gekennzeichnet, dass**
in dem Führungsabschnitt (10) wenigstens eine Drainageöffnung (14) angeordnet ist, die eine Flüssigkeitsverbindung zwischen der innenliegenden Führungsfläche (13) und einer Außenfläche des Führungsabschnitts (10) herstellt.

2. Vorrichtung nach Anspruch 1, wobei die Spreizelemente (2) ringförmig mit einem mittleren Durchmesser ausgebildet sind, der einem Durchmesser der radialen Verzweigung der Dichtungsabschnitte (11) entspricht.

3. Vorrichtung nach Anspruch 1 oder 2, wobei die Spreizelemente (2) als Blechbiegeteile hergestellt sind.

4. Vorrichtung nach Anspruch 3, wobei die Spreizelemente (2) einen Querschnitt mit wenigstens einem Wendeabschnitt (20) und zwei Schnenkelabschnitten (21) aufweisen.

5. Vorrichtung nach einem der Ansprüche 1 bis 4, wobei die Außenfläche des Führungsabschnitts (10) einen kleineren Außendurchmesser als ein äußerer Lippenabschnitt (12b) der Dichtungsabschnitte (11) aufweist.

6. Vorrichtung nach einem der Ansprüche 1 bis 5, wobei der Führungsabschnitt (10) mit den integralen Dichtungsabschnitten (11) in Bezug zu einer axialen Mitte im Wesentlichen symmetrisch ausgebildet ist.

7. Vorrichtung nach einem der Ansprüche 1 bis 6, wobei an dem axialen Ende von wenigstens einem äußeren Lippenabschnitt (12b) ein Kragenabschnitt (16) ausgebildet ist, der einen größeren Außenumfang als der äußere Lippenabschnitt (12b) aufweist und zu diesem stufenförmig abgesetzt ist.

8. Vorrichtung nach einem der Ansprüche 1 bis 6, ferner aufweisend:
wenigstens einen ringförmigen Einpressabschnitt (17), der axial benachbart zu einem Dichtungsabschnitt (11) die Führungsbuchse (1) mittels Presspassung in der Durchtrittsöffnung (4) fixiert, und eine radiale Verzweigung eines Dichtungsabschnitts (11), in der ein Spreizelement (2) eingesetzt ist, axial abschließt.

9. Vorrichtung nach Anspruch 8, wobei das wenigstens eine Einpresselement (17) radiale Konturen und/oder radiale Abmessungen aufweist, die eine Passung gegenüber den benachbarten Lippenabschnitten (12a, 12b) bereitstellen.

10. Vorrichtung nach Anspruch 8 oder 9, wobei das wenigstens eine Einpresselement (17) einen größeren Außendurchmesser als ein äußerer Lippenabschnitt (12b) aufweist.

11. Vorrichtung nach einem der Ansprüche 8 bis 10, wobei ein Einpresselement (17a) einen im Wesentlichen gleichen Außendurchmesser wie ein benachbarter äußerer Lippenabschnitt (12b) aufweist, und ein Einpresselement (17b) einen größeren Außendurchmesser als ein benachbarter äußerer Lippenabschnitt (12b) aufweist.

12. Vorrichtung nach einem der Ansprüche 8 bis 11, wobei ein erster axialer Abschnitt des wenigstens einen Einpresselements (17) aus PTFE oder PVDF besteht, und ein zweiter axialer Abschnitt aus einem anderen Kunstharz besteht.

## Claims

1. A device for guiding a linear sliding movement of a force transfer element (3) within an opening (4) between two regions (41, 42) with different media, comprising:
a guide bushing (1) that has a central sheath-like guide portion (10) with an inside guide surface (13), wherein
the guide bushing (1) has sealing portions (11) that extend to the axial ends of the guide portion (10) and branch into at least one radially inner lip portion (12a) and one radially outer lip portion (12b);
spreading elements (2) that can generate a spreading effect between two radii by means of elastic pre-tensioning are disposed in a radial branch of the sealing portions (11) between the inner lip portion (12a) and the outer lip portion (12b); and
the guide portion (10) and the sealing portions (11) are together formed as an integral body made of PTFE, a polymer compound containing PTFE or of PVDF;
**characterised in that**
at least one drainage opening (14) is located within the guide portion (10), which drainage opening establishes a fluid connection between the inside guide surface (13) and an outside surface of the guide portion (10).

2. The device according to Claim 1, the spreading elements (2) being formed in the shape of a ring with an average diameter that corresponds to a diameter of the radial branch of the sealing portions (11).

3. The device according to Claim 1 or 2, the spreading elements (2) being produced as bent sheet metal parts.

4. The device according to Claim 3, the spreading elements (2) having a cross-section with at least one turn-around portion (20) and two arm portions (21).

5. The device according to any of Claims 1 to 4, the outside surface of the guide portion (10) having a smaller outside diameter than an outer lip portion (12b) of the sealing portions (11).

6. The device according to any of Claims 1 to 5, the guide portion (10) with the integral sealing portions (11) being formed to be substantially symmetrical relative to an axial centre.

7. The device according to any of Claims 1 to 6, there being formed at the axial end of at least one outer lip portion (12b) a collar portion (16) that has a larger outer circumference than the outer lip portion (12b) and being offset from the latter by a step.

8. The device according to any of Claims 1 to 6, further comprising:
at least one annular pressing-in portion (17) axially adjacent to a sealing portion (11) that fixes the guide bushing (1) by press fit within the opening (4), and axially closes a radial branch of a sealing portion (11) in which a spreading element (2) is inserted.

9. The device according to Claim 8, the at least one pressing-in element (17) having radial contours and/or radial dimensions that provide a fit with respect to the adjacent lip portions (12a, 12b).

10. The device according to Claim 8 or 9, the at least one pressing-in element (17) having a larger outside diameter than an outer lip portion (12b).

11. The device according to any of Claims 8 to 10, a pressing-in element (17a) having substantially the same outside diameter as an adjacent outer lip portion (12b), and a pressing-in element (17b) having a larger outside diameter than an adjacent outer lip portion (12b).

12. The device according to any of Claims 8 to 11, a first axial portion of the at least one pressing-in element (17) being made of PTFE or PVDF, and a second axial portion being made of a different synthetic resin.

## Revendications

1. Dispositif de guidage du mouvement de glissement linéaire d'un élément de transmission de force (3) dans une ouverture de passage (4) entre deux zones (41, 42) renfermant des milieux différents comprenant :
une douille de guidage (1) qui comporte un segment de guidage central en forme d'enveloppe (10) ayant une surface de guidage interne (3),
la douille de guidage (1) comprenant des segments d'étanchéité (11) qui s'étendent vers les extrémités axiales du segment de guidage (10) et se ramifient en au moins un segment de lèvre interne radial (12a) et un segment de lèvre externe radial (12b),
des éléments d'écartement (2), permettant d'obtenir par précontrainte élastique une action d'écartement entre deux rayons, étant installés dans une ramification radiale des segments d'étanchéité (11) entre le segment de lèvre interne (12a) et le segment de lèvre externe (12b), et le segment de guidage (10) et les segments d'étanchéité (11) étant conjointement réalisés sous la forme d'un corps intégré en PTFE ou en un composé polymère renfermant du PTFE ou en PVDF,
**caractérisé en ce que**
dans le segment de guidage (10) est installée au moins une ouverture de drainage (14) qui permet d'obtenir une liaison fluidique entre la surface de guidage interne (13) et la surface externe du segment de guidage (10).

2. Dispositif conforme à la revendication 1,
dans lequel les éléments d'écartement (2) sont de forme annulaire et ont un diamètre moyen qui correspond au diamètre de la ramification radiale des segments d'étanchéité (11).

3. Dispositif conforme à la revendication 1 ou 2,
dans lequel les éléments d'écartement (2) sont réalisés sous la forme de pièces en tôle courbées.

4. Dispositif conforme à la revendication 3,
dans lequel des éléments d'écartement (2) ont une section avec au moins un segment courbe (20) et deux segments de branche (21).

5. Dispositif conforme à l'une des revendications 1 à 4,
dans lequel la surface externe du segment de guidage (10) a un plus petit diamètre externe que le segment de lèvre externe (12b) du segment d'étanchéité (11).

6. Dispositif conforme à l'une des revendications 1 à 5,
dans lequel le segment de guidage (10) avec les segments d'étanchéité (11) intégrés est essentiellement symétrique par rapport à l'axe médian.

7. Dispositif conforme à l'une des revendications 1 à 6,
dans lequel sur les extrémités axiales d'au moins un segment de lèvre externe (12b) est formé un segment en forme de collerette (16) qui a une plus grande circonférence externe que le segment de lèvre externe (12b) et s'interrompt en forme de gradin vers celui-ci.

8. Dispositif conforme à l'une des revendications 1 à 6,
comportant en outre :
au moins un segment d'enfoncement annulaire (17) qui fixe la douille de guidage (1) par ajustement serré dans l'ouverture de passage (4) au voisinage d'un segment d'étanchéité (11) axial et ferme un embranchement radial d'un segment d'étanchéité (11) dans lequel est introduit un élément d'écartement (2).

9. Dispositif conforme à la revendication 8,
dans lequel l'élément d'enfoncement (17) a des contours radiaux et/ou des dimensions radiales qui permettent d'obtenir un ajustement par rapport aux segments de lèvre (12a, 12b) voisins.

10. Dispositif conforme à la revendication 8 ou 9,
dans lequel l'élément d'enfoncement (17) a un plus grand diamètre externe que le segment de lèvre externe (12b).

11. Dispositif conforme à l'une des revendications 8 à 10,
dans lequel un élément d'enfoncement (17a) a un diamètre externe essentiellement égal à celui d'un segment de lèvre externe (12b) voisin, et un élément d'enfoncement (17b) a un plus grand diamètre externe qu'un segment de lèvre externe (12b) voisin.

12. Dispositif conforme à l'une des revendications 8 à 11,
dans lequel un premier segment axial de l'élément d'enfoncement (17) est en PTFE ou en PVDF, et un second segment axial de cet élément est en une autre résine synthétique.
